(19) Europäisches Patentamt
European Patent Office
Office européen des brevets

(11) EP 4 641 462 A1

(12) EUROPEAN PATENT APPLICATION

(43) Date of publication:
**29.10.2025 Bulletin 2025/44**

(21) Application number: **25172017.3**

(22) Date of filing: **23.04.2025**

(51) International Patent Classification (IPC):
***G06Q 10/20*** *(2023.01)* ***G05B 23/02*** *(2006.01)*
*G06N 20/00* *(2019.01)*

(52) Cooperative Patent Classification (CPC):
**G06N 20/00; G06Q 10/20;** G05B 23/0283

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **24.04.2024 US 202418644263**

(71) Applicant: **The Boeing Company**
**Arlington, VA 22202 (US)**

(72) Inventors:
- **TAN, Kemal Baris**
**ARLINGTON, 22202 (US)**
- **BELLEMARE-DAVIS, Alexander**
**ARLINGTON, 22202 (US)**
- **LANGILLE, Anni Sarah**
**ARLINGTON, 22202 (US)**

(74) Representative: **Plasseraud IP**
**104 Rue de Richelieu**
**CS92104**
**75080 Paris Cedex 02 (FR)**

# (54) SYSTEM AND METHOD FOR FORECASTING RESOLUTION OF NON-CONFORMANCES IN RELATION TO VEHICLE COMPONENTS DURING MAINTENANCE OPERATIONS

(57) A system and a method include one or more control units configured to: collate historical work records related to a vehicle model; calculate, from the historical work records, probabilities of one or more non-conformances during an induction of a vehicle, wherein the induction is an overall record for a heavy maintenance depot visit; predict labor time to resolve the one or more non-conformances; and output an electronic signal including information regarding the labor time, as predicted by the one or more control units, to a user interface display.

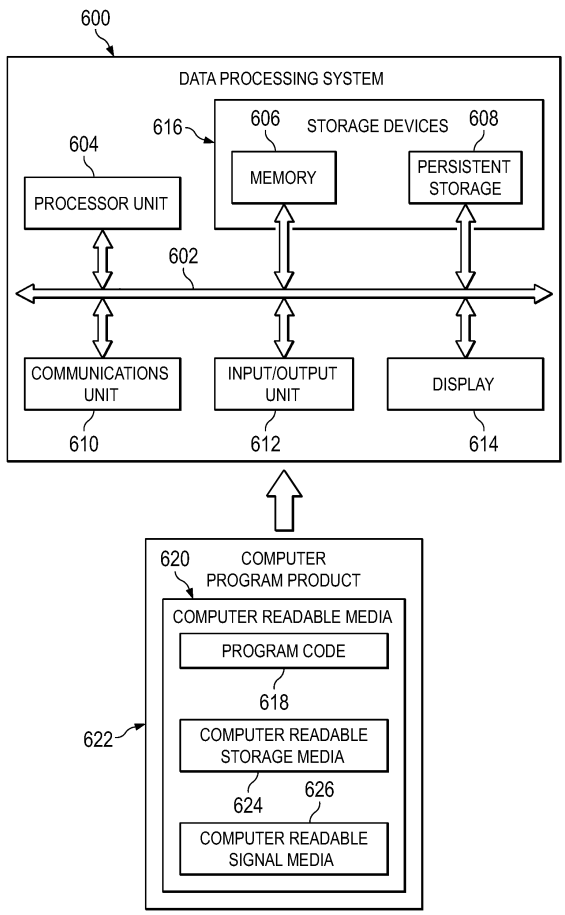


FIG. 6



Processed by Luminess, 75001 PARIS (FR)

## Description

### FIELD OF THE DISCLOSURE

Examples of the present disclosure generally relate to systems and methods for forecasting resolution of non-conformances in relation to maintenance of vehicles, such as aircraft.

### BACKGROUND OF THE DISCLOSURE

Aircraft are used to transport passengers and cargo between various locations. Numerous aircraft depart from and arrive at a typical airport every day.

Maintenance of aircraft involves performing various maintenance operations to ensure continued desired operation of the aircraft and/or components thereof. The maintenance operations can include inspection, replacement, reworking inconsistencies in components, or other operations that maintain compliance with airworthiness directives and maintenance standards.

Aircraft maintenance is often performed on a scheduled basis. Certain scientific reliability models focus on predicting unreliability in operation by estimating lifetimes between discrete events, such as part failures. The models statistically predict failure as a function of, for example, flight hours or landings. Non-conformance is distinct from failure in that it represents a degraded condition that falls short of detectable failure, which might not occur in operation until a later time. Non-conformance is typically discovered upon inspection, whether specifically scheduled inspection, or in conjunction with maintenance on a related system.

Further, various components of an aircraft can be susceptible to corrosion. A corrosion finding is also distinct from a failure in that it also represents a degraded condition that falls short of detectable failure. A maintenance crew can have a rough estimate of how long it takes to fix corrosion related discrepancies. However, absent the context of activity that produces the non-conformance, the labor time (that is, labor hours, hours performed during work, man hours, and/or the like) required to fix the corrosion related non-conformance is typically unknown, and therefore intractable for any useful forecast. It is to be understood that labor time, labor hours, hours performed during work, man hours, or the like, as used herein, are equivalent terms.

As a single depot-level heavy maintenance visit for an aircraft can last for weeks or months, and multiple aircraft are inducted in staggered schedules at any given time, discovering unexpected corrosion non-conformances can lead to extended maintenance time and labor, as well as delay the aircraft returning to service. Maintenance crews are generally prepared to support scheduled maintenance, but discrepancies as a result of non-conformances -- which are a form of unreliability discovered in depot-level maintenance -- represent a stress upon the maintenance crews, leading to significantly increased maintenance time and reduced fleet availability.

### SUMMARY OF THE DISCLOSURE

A need exists for a system and a method that efficiently and effectively schedule maintenance of aircraft, including parts and labor. Further, a need exists for a system and a method for forecasting and predicting corrosion-related non-conformances for aircraft during maintenance operations.

With those needs in mind, certain examples of the present disclosure provide a system including one or more control units configured to: collate historical work records related to a vehicle model; calculate, from the historical work records, probabilities of one or more non-conformances during an induction of a vehicle, wherein the induction is an overall record for a heavy maintenance depot visit; predict labor time to resolve the one or more non-conformances; and output an electronic signal including information regarding the labor time, as predicted by the one or more control units, to a user interface display.

In at least one example, the historical work records specify one or more work tasks, non-conformances discovered during the one or more work tasks, any replacement parts required for the one or more work tasks, and one or more past labor times required to resolve the one or more non-conformances.

In at least one example, the system also includes a user interface display. The one or more control units are further configured to show the labor time, as predicted by the one or more control units, on the user interface display.

In at least one example, the one or more control units are further configured to determine a probability of the induction having a given work task, and a probability of the induction having one or more corrosion non-conformances. As a further example, the one or more control units are configured to determine a probability of having the one or more non-conformances for the given task work from the probability of the induction having the given work task, and the probability of the induction having the one or more corrosion non-conformances.

In at least one example, the one or more control units are further configured to determine a probability that a disposition code is for a given work task.

In at least one example, the one or more control units are further configured to determine a probability of having a given work task with the one or more non-conformances requiring a part.

In at least one example, the control unit is configured to predict the labor time, at least in part, by determining an average labor time as a sum of man hours for a given work task with corrosion divided by a historical count of given work tasks.

In at least one example, the control unit is configured to predict the labor time, at least in part, by determining an overall value for all work tasks by multiplying a probability of a work task having a corrosion non-conformance with an average labor time required for each work task.

The one or more control units can be further configured to automatically control one or more maintenance devices to perform one or more maintenance operations during the labor time.

The one or more control units can be or otherwise include an artificial intelligence or machine learning system.

Certain examples of the present disclosure provide a method including collating, by one or more control units, historical work records related to a vehicle model; calculating, by the one or more control units, from the historical work records, probabilities of one or more non-conformances during an induction of a vehicle, wherein the induction is an overall record for a heavy maintenance depot visit; predicting, by the one or more controls unit, labor time to resolve the one or more non-conformances; outputting, by the one or more control units, an electronic signal including information regarding the labor time, as predicted by the one or more control units, to a user interface display; and showing, by the one or more control units, the labor time, as predicted by the one or more control units, on the user interface display.

## BRIEF DESCRIPTION OF THE DRAWINGS

Figure 1 illustrates a schematic diagram of a data processing system, according to an example of the present disclosure.

Figure 2 illustrates a block diagram of a non-conformance forecasting system, according to an example of the present disclosure.

Figure 3 illustrates a diagram of replacement part prediction, according to the prior art.

Figure 4 illustrates a diagram of non-conformance-based forecasting, according to an example of the present disclosure.

Figure 5 illustrates a flowchart of a method, according to an example of the present disclosure.

Figure 6 illustrates a block diagram of a data processing system, according to an example of the present disclosure.

Figure 7 is an illustration of an aircraft manufacturing and service method in accordance with an illustrative embodiment;

Figure 8 illustrates a block diagram of an aircraft in which examples of the present disclosure can be implemented.

Figure 9 illustrates a block diagram of a product management system, according to an example of the present disclosure.

Figure 10 illustrates a decision tree diagram illustrating how a method of predicting non-conformances can be applied to a standard depot induction, according to an example of the present disclosure.

Figure 11 illustrates a schematic block diagram of a control unit, according to an example of the present disclosure.

Figure 12 illustrates a perspective front view of an aircraft, according to an example of the present disclosure.

## DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps.

Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

Examples of the present disclosure provide systems and method that predict the probability of discrepancies related to corrosion discovered in depot-level heavy maintenance of an aircraft, organized by (1) the inspection activities where the non-conformances will likely be discovered and (2) the man hours required to solve given corrosion discrepancy. The systems and methods address a need to predict this special form of unreliability, permitting a maintenance crew to better anticipate unreliability-driven man hours required and plan heavy maintenance accordingly.

In at least one example, the systems and methods described herein relate labor time (that is, man hours) required, and corrosion disposition codes to originating non-conformances, the work instruction records that produced the discovery, and the specific work package (depot induction) and aircraft under consideration. The systems and methods utilize a statistical modeling configured to forecast the probability and quantity of non-conformances likely to occur in any given stage and location of the maintenance, as well as the probability of corrosion and labor time likely to be required to remedy such non-conformances.

In at least one example, the systems and methods provide a visual tool that allows users to: (a) navigate the probabilities and required labor time for any upcoming induction, (b) update the forecasts of risk for inductions in progress (that is, modeling where risks have passed or have yet to be seen), and (c) examine where high-risk maintenance may be needed, in relation to labor time.

United States Patent Application Publication No. 2024/0046176, entitled "Heavy Maintenance Non-Conformance Forecasting," discloses systems and methods for predicting non-conformance of vehicle parts, and is hereby incorporated by reference in its entirety.

Examples of the present disclosure recognize and take into account that non-conformance is not a well-defined or discrete state of failure. Instead, non-conformance is a degraded, but not overt, deviation in condition or performance which is typically discovered upon inspection during depot-level maintenance. Non-conformances are typically discovered upon inspection, such as, for example, depot-level inspections and other maintenance procedures for aircraft. Because depot heavy maintenance occurs at long intervals (for example, 5-6 years), non-conformances can occur with both extremely reliable components (which tend to have very little data on which to estimate lifetimes) and rotatable components (which tend to have a high quantity-per-aircraft or other vehicles).

Non-conformances require mediation, because a non-conforming part no longer conforms to a design specification of tolerance. In contrast, a degraded part is not necessarily non-conformant, and does not necessarily required mediation.

The systems and methods described herein recognize and take into account that because a single depot level heavy maintenance visit may last for weeks or months, it is valuable to know when and where in the course of maintenance demands for parts and labor time are likely to arise.

Figure 1 illustrates a data processing system 100, according to an example of the present disclosure. The network data processing system 100 is a network of computers in which examples of the present disclosure can be implemented. The network data processing system 100 includes network 102, which is the medium used to provide communication links between various devices and computers connected together within the network data processing system 100. The network 102 can include connections, such as wires, wireless communication links, or fiber optic cables.

A server computer 104 and a server computer 106 connect to the network 102 along with a storage unit 108. In addition, client devices 110 connect to the network 102. The server computer 104 provides information, such as boot files, operating system images, and applications to the client devices 110. The client devices 110 can be, for example, computers, workstations, or network computers. As depicted, the client devices 110 include client computers 112, 114, and 116. The client devices 110 can also include other types of client devices, such as a mobile phone 118, a tablet computer 120, and smart glasses 122.

As shown, the server computer 104, the server computer 106, the storage unit 108, and the client devices 110 are network devices that connect to the network 102, in which the network 102 is the communications media for these network devices. Some or all of the client devices 110 can form an Internet of things (IoT) in which these physical devices can connect to the network 102 and exchange information with each other over the network 102.

The client devices 110 are clients to the server computer 104 in this example. The network data processing system 100 can include additional server computers, client computers, and other devices not shown. The client devices 110 connect to the network 102 utilizing at least one of wired, optical fiber, or wireless connections.

Program code located in the network data processing system 100 can be stored on a computer-recordable storage medium and downloaded to a data processing system or other device for use. For example, the program code can be stored on a computer-recordable storage medium on the server computer 104 and downloaded to the client devices 110 over the network 102 for use on the client devices 110.

In at least one example, the network data processing system 100 is the Internet with the network 102 representing a worldwide collection of networks and gateways that use the Transmission Control Protocol/Internet Protocol (TCP/IP) suite of protocols to communicate with one another. At the heart of the Internet is a backbone of high-speed data communication lines between major nodes or host computers including thousands of commercial, governmental, educational, and other computer systems that route data and messages. The network data processing system 100 can also be implemented using a number of different types of networks. For example, the network 102 include at least one of the Internet, an intranet, a local area network (LAN), a metropolitan area network (MAN), or a wide area network (WAN). Figure 1 is intended as an example, and not as an architectural limitation for the different illustrative embodiments.

Figure 2 illustrates a block diagram of a non-conformance forecasting system 200, according to an example of the present disclosure. The non-conformance forecasting system 200 includes components that can be implemented in hardware such as the hardware shown in network data processing system 100 in Figure 1.

The non-conformance forecasting system 200 collates a number of historical work records 202 related to a specific vehicle model. The vehicle model can be for any type of vehicle such as an aircraft, automobile, train, watercraft, spacecraft, or the like. In at least one example, the historical work record 204 includes a type of work task 206 performed on the vehicle, any non-conformances 208 discovered during the work task 206, any required replacement parts 210 needed to resolve (for example, fix, remedy, replace, and/or the like) the non-conformances 208, the location 212 of the work task 206 (that is, at what service location the work was performed), labor time 213 (for example, man hours) for resolving the non-conformances, and the timing 214 of the work task 206 (for example, 5-year servicing, 50,000-mile servicing, or the like, depending on vehicle type).

Based on the historical work records 202, the non-conformance forecasting system 200 makes a number of work task predictions 216. Each work task prediction 218 calculates a probability of discovering non-conformances 220 in the course of performing the work task, the required replacement parts 222 (if any), and the required labor time 223 likely needed to resolve the non-conformance(s). The work task predictions 218 can be based on location 224 where the work task is performed and the timing 226 of the work task.

The non-conformance forecasting system 200 can display a number of correlations related to non-conformance predictions in a user interface display 228. The non-conformance forecasting system 200 can display the probability of a non-conformance according to the type of work task 230. The non-conformance forecasting system 200 can display a percentage of non-conformances requiring replacement parts 232. The non-conformance forecasting system 200 can display probabilities of non-conformances requiring replacement parts according to the type of work task 234. The non-conformance forecasting system 200 can display the frequency of replacement parts ordered to resolve non-conformances according to the type of work task 236. The non-conformance forecasting system 200 can also display replacement parts and respective quantities to have on hand at specified locations according to scheduled work tasks 238. The non-conformance forecasting system 200 also displays the estimated labor time 239 to resolve non-conformances according to the type of work task.

The user interface display 228 provides an interactive visual tool, such as a user interface dashboard 242, that allows a user to navigate the probabilities and quantities of non-conformances, replacement parts, and labor time for any upcoming induction. The user interface display 228 also allows the user to update forecasts of risk for inductions already in progress (for example, modeling where risks have passed or have yet to be seen). Users may also utilize the user interface display 228 to examine where high-risk (for example, out of stock) replacement parts are likely to be needed and in what quantity, permitting the supply chain to better anticipate non-conformance-driven parts demand and mitigate risk of being out of stock.

The user interface display 228 is a physical hardware system and includes one or more display devices on which a user interface such as the user interface dashboard 242 can be displayed. In at least one example, the user interface dashboard 242 is a graphical user interface.

The display devices of the user interface display 228 can include at least one of a light emitting diode (LED) display, a liquid crystal display (LCD), an organic light emitting diode (OLED) display, a computer monitor, a projector, a flat panel display, a heads-up display (HUD), a head-mounted display (HMD), a television, and/or some other suitable device that can output information for the visual presentation of information.

Based on the correlations related to non-conformances, non-conformance forecasting system 200 can send (a) replacement part requests 240 for specific locations according to scheduled work tasks at those locations, and/or (b) labor time predictions 241 for the work required to resolve one or more non-conformances.

In at least one example, the non-conformance forecasting system 200 provides a "living document" process using live, real-time data and can serve as a platform on which to test different forecasting models. For example, the non-conformance forecasting system 200 can be used to test how far back in time historical parts data and labor time data remains relevant. The non-conformance forecasting system 200 can also provide data and performance monitoring features such as showing which datasets (for example, inductions in progress) are included or excluded to enable users to monitor the quality and trustworthiness of the predictions being produced.

The non-conformance forecasting system 200 can be implemented in software, hardware, firmware, or a combination thereof. When software is used, the operations performed by the non-conformance forecasting system 200 can be implemented in program code configured to run on hardware, such as a processor unit. When firmware is used, the operations performed by the non-conformance forecasting system 200 can be implemented in program code and data and stored in persistent memory to run on a processor unit. When hardware is employed, the hardware can include circuits that operate to perform the operations in non-conformance forecasting system 200.

In the illustrative examples, the hardware can take a form including one or more a circuit system, an integrated circuit, an application specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field programmable logic array, a field programmable gate array, and other suitable hardware devices. Additionally, the processes can be implemented in organic components integrated with inorganic components and can be comprised entirely of organic components excluding a human being. For example, the processes can be implemented as circuits in organic semiconductors.

A computer system 250 is a physical hardware system and includes one or more data processing systems. When more than one data processing system is present in the computer system 250, those data processing systems are in communication with each other using a communications medium. The communications medium can be a network. The data processing systems can be selected from at least one of a computer, a server computer, a tablet computer, or some other suitable data processing system.

As depicted, the computer system 250 includes a number of control units 252 (such as processor units, processors, or the like) configured to execute program code 254 implementing processes in the illustrative examples. As used herein, a processor unit or processor is a hardware device, and includes hardware circuits such as those on an integrated circuit that respond and process instructions and program code that operate a computer. When a number of control units 252 execute program code 254 for a process, the number of control units 252 is one or more processors that can be on the same computer or on different computers. In other words, the process can be distributed between processor units or processors on the same or different computers in a computer system. Further, the number of control units 252 can be of the same type or different type of processor units or processors. For example, a number of control units can include one or more of a single core processor, a dual-core processor, a multi-processor core, a general-purpose central processing unit (CPU), a graphics processing unit (GPU), a digital signal processor (DSP), or some other type of processor unit.

As described herein, examples of the present disclosure provide a system including one or more control units (for example, one or more control units 252) configured to collate historical work records 204 related to a vehicle model, calculate, from the historical work records 204, probabilities of non-conformances during an induction of a vehicle, predicting labor time to resolve the non-conformances, and outputting an electronic signal including information regarding the labor time to the user interface display 228. In at least one example, the historical work records specify one or more work tasks, non-conformances discovered during the work task(s), any replacement parts required for the work task(s), and one or more past labor times (that is, previous labor times for completion of particular maintenance operations) required to resolve the non-conformances. In at least one example, the one or more control units are further configured to show the predicted labor time on the user interface display 228.

Figure 3 illustrates a diagram of a replacement part prediction, according to the prior art. As shown, previous demand modeling focused on predicting the total quantities of individual parts from bulk historical records, and did not consider labor time for resolving a non-conformance. Such demand modeling is best suited for modeling physical failures that occur on a continuous basis as a function of operational usage.

Modeling total demand for individual parts is suited for recommending scheduled replacements, but not for modeling inspections. Such an approach might work for minor hardware, but does not provide insight regarding why, where, or when the replacement parts will be needed, nor labor time for resolving non-conformances.

Figure 4 illustrates a diagram of non-conformance-based forecasting, according to an example of the present disclosure. The non-conformance-based forecasting 400 may be implemented in the non-conformance forecasting system 200. In at least one example, one or more of the control units 252 are configured to receive data, such as the historical work records 202, then forecast parts and labor time for resolving one or more non-conformances.

In at least one example, the control unit(s) 252 provides the non-conformance-based forecasting 400 based on non-conformance records, parts orders that result from the non-conformances, the specific activity (work task) during which the non-conformances are discovered, and labor time for resolving the non-conformances. This approach ties the demand for replacement parts to its root cause, as well as factoring in labor time. The non-conformance-based forecasting 400 recognizes that parts tend to be ordered in groups according to specific work tasks, and that resolving non-conformances includes the maintenance crew time (that is labor time (man hours)). Therefore, in addition to a main part being replaced, there are often associated parts such as bearings and bushings that are replaced as well, as well as the time for one or more maintenance technicians to replace the parts. By focusing on depot induction tasks (work cards) rather than modeling individual part life, the illustrative example turn otherwise unexpected unreliability into scheduled events. This approach informs the user as what is likely to be found non-conforming, where and when it is likely to be found, what replacement parts are likely to resolve the non-conformance, and the labor time to resolve the non-conformance.

Figure 5 illustrates a flowchart of a method, according to an example of the present disclosure. Figure 5 illustrates a process for predicting non-conformance of vehicle parts. The process in Figure 5 can be implemented in hardware, software, or both. When implemented in software, the process can take the form of program code that is run by one of more control units located in one or more hardware devices in one or more computer systems. For example, the process can be implemented in non-conformance forecasting system 200 in computer system 250 in Figure 2.

The process 500 begins by the control unit(s) 252 (shown in Figure 2) collating historical work records related to a vehicle model, wherein each work record specifies: a work task, non-conformances discovered during the work task, replacement parts required for the work task, when the work task occurred, where the work task occurred, and the labor time for resolving the non-conformances (operation 502). Next, the control unit(s) 252 calculates, from the historical work records, probabilities of non-conformances according to types of work tasks, locations of work tasks, timing of work tasks, and labor times (operation 504). In at least one example, the work record may not include replacement parts required.

The system then determines replacement part requirements according to the types of non-conformances (operation 506). The system further determines labor time(s) according to types of non-conformances (operation 507).

The system sends requests for replacement parts for specified service locations according to scheduled work tasks for the vehicle model at the service locations, anticipated probabilities of non-conformances related to the work tasks, and predicted labor times for resolving the non-conformances (operation 508). The process 500 then ends.

The control unit(s) 252 can show on the user interface display 228 a chart of probabilities of non-conformance discovery according to type of work task, percentages of non-conformances requiring replacement parts, probabilities of non-conformances requiring in replacement part orders according to type of work task, frequency of replacement parts ordered to resolve non-conformances according to type of work task, replacement parts and respective quantities to have on hand at a specified location according to scheduled work tasks, and/or predicted labor times for resolving the non-conformances. For example, the control unit(s) 252 can show on the user interface display 228 predicted labor times (for example, man hours) for resolving various non-conformances.

Figure 6 illustrates a block diagram of a data processing system 600, according to an example of the present disclosure. The data processing system 600 can be used to implement server computers 104 and 106 and client devices 110 in Figure 1, as well as computer system 250 in Figure 2. In this illustrative example, the data processing system 600 includes communications framework 602, which provides communications between processor unit 604, memory 606, persistent storage 608, communications unit 610, input/output (I/O) unit 612, and display 614. In this example, the communications framework 602 takes the form of a bus system.

In at least one example, the processor unit 604 is an example of the control unit(s) 252 shown in Figure 2. The processor unit 604 serves to execute instructions for software that may be loaded into the memory 606. The processor unit 604 can be a number of processors, a multi-processor core, or some other type of processor, depending on the particular implementation. In an at least one example, the processor unit 604 includes one or more conventional general-purpose central processing units (CPUs). Optionally, the processor unit 604 includes one or more graphical processing units (GPUs).

The memory 606 and the persistent storage 608 are examples of storage devices 616. A storage device is any piece of hardware that is capable of storing information, such as, for example, without limitation, at least one of data, program code in functional form, or other suitable information either on a temporary basis, a permanent basis, or both on a temporary basis and a permanent basis. The storage devices 616 can also be referred to as computer-readable storage devices in these illustrative examples. The memory 606, in these examples, may be, for example, a random access memory or any other suitable volatile or non-volatile storage device. The persistent storage 608 can take various forms, depending on the particular implementation.

For example, the persistent storage 608 can contain one or more components or devices. The persistent storage 608 can be a hard drive, a flash memory, a rewritable optical disk, a rewritable magnetic tape, or some combination of the above. The media used by the persistent storage 608 also may be removable. For example, a removable hard drive can be used for the persistent storage 608. The communications unit 610, in these illustrative examples, provides for communications with other data processing systems or devices. In these illustrative examples, the communications unit 610 is a network interface card.

Input/output unit 612 allows for input and output of data with other devices that may be connected to data processing system 600. For example, the input/output unit 612 can provide a connection for user input through at least one of a keyboard, a mouse, or some other suitable input device. Further, the input/output unit 612 can send output to a printer. The display 614 provides a mechanism to display information to a user.

Instructions for at least one of the operating system, applications, or programs can be located in storage devices 616, which are in communication with the processor unit 604 through communications framework 602. The processes of the different examples can be performed by the processor unit 604 using computer-implemented instructions, which can be located in a memory, such as the memory 606.

These instructions are referred to as program code, computer-usable program code, or computer-readable program code that can be read and executed by a processor in processor unit 604. The program code in the different examples can be embodied on different physical or computer-readable storage media, such as memory 606 or persistent storage 608.

Program code 618 is located in a functional form on computer-readable media 620 that is selectively removable and may be loaded onto or transferred to data processing system 600 for execution by processor unit 604. Program code 618 and computer-readable media 620 form computer program product 622 in these illustrative examples. In at least one example, the computer-readable media 620 can be computer-readable storage media 624 or computer-readable signal media 626.

In these illustrative examples, computer-readable storage media 624 is a physical or tangible storage device used to store program code 618 rather than a medium that propagates or transmits program code 618. Computer readable storage media 624, as used herein, is not to be construed as being transitory signals per se, such as radio waves or other freely propagating electromagnetic waves, electromagnetic waves propagating through a waveguide or other transmission media (for example, light pulses passing through a fiber-optic cable), or electrical signals transmitted through a wire.

Optionally, program code 618 may be transferred to data processing system 600 using computer-readable signal media 626. Computer-readable signal media 626 can be, for example, a propagated data signal containing program code 618. For example, computer-readable signal media 626 can be at least one of an electromagnetic signal, an optical signal, or any other suitable type of signal. These signals may be transmitted over at least one of communications links, such as wireless communications links, optical fiber cable, coaxial cable, a wire, or any other suitable type of communications link.

The different components illustrated for data processing system 600 are not meant to provide architectural limitations to the manner in which different embodiments may be implemented. The different illustrative embodiments can be implemented in a data processing system including components in addition to or in place of those illustrated for data processing system 600. Other components shown in Figure 6 can be varied from the illustrative examples shown. The different examples can be implemented using any hardware device or system capable of running program code 618.

Illustrative examples of the disclosure are described in the context of aircraft manufacturing and service method 700 as shown in Figure 7 and aircraft 800 as shown in Figure 8. Turning first to Figure 7, an illustration of an aircraft manufacturing and service method is depicted, according to an example of the present disclosure. During pre-production, aircraft manufacturing and service method 700 can include specification and design 702 of aircraft 800 in Figure 8 and material procurement 704.

During production, component and subassembly manufacturing 706 and system integration 708 of aircraft 800 in Figure 8 takes place. Thereafter, aircraft 800 in Figure 8 can go through certification and delivery 710 in order to be placed in service 712. While in service 712 by a customer, aircraft 800 in Figure 8 is scheduled for routine maintenance and service 714, which may include modification, reconfiguration, refurbishment, and other maintenance or service.

Each of the processes of aircraft manufacturing and service method 700 can be performed or carried out by a system integrator, a third party, an operator, or some combination thereof. In these examples, the operator can be a customer. For the purposes of this description, a system integrator can include, without limitation, any number of aircraft manufacturers and major-system subcontractors; a third party may include, without limitation, any number of vendors, subcontractors, and suppliers; and an operator can be an airline, a leasing company, a military entity, a service organization, and so on.

With reference now to Figure 8, an illustration of an aircraft is depicted in which an illustrative example can be implemented. In this example, aircraft 800 is produced by aircraft manufacturing and service method 700 in Figure 7 and can include airframe 802 with plurality of systems 804 and interior 806. Examples of systems 804 include one or more of propulsion system 808, electrical system 810, hydraulic system 812, and environmental system 814. Any number of other systems can be included. Although an aerospace example is shown, different illustrative examples can be applied to other industries, such as the automotive industry.

Systems and methods described herein can be employed during at least one of the stages of aircraft manufacturing and service method 700 in Figure 7.

In one illustrative example, components or subassemblies produced in component and subassembly manufacturing 706 in Figure 7 can be fabricated or manufactured in a manner similar to components or subassemblies produced while aircraft 800 is in service 712 in Figure 7. As yet another example, one or more apparatus embodiments, method embodiments, or a combination thereof can be utilized during production stages, such as component and subassembly manufacturing 706 and system integration 708 in Figure 7. One or more apparatus embodiments, method embodiments, or a combination thereof may be utilized while aircraft 800 is in service 712, during maintenance and service 714 in Figure 7, or both. The use of a number of the different illustrative embodiments can substantially expedite the assembly of aircraft 800, reduce the cost of aircraft 800, or both expedite the assembly of aircraft 800 and reduce the cost of aircraft 800.

Figure 9 illustrates a block diagram of a product management system 900, according to an example of the present disclosure. The product management system 900 is a physical hardware system. In at least one example, the product management system 900 includes at least one of manufacturing system 902 or maintenance system 904.

The manufacturing system 902 is configured to manufacture products, such as aircraft 800 in Figure 8. As depicted, the manufacturing system 902 includes manufacturing equipment 906. The manufacturing equipment 906 includes at least one of fabrication equipment 908 or assembly equipment 910.

The fabrication equipment 908 is equipment used to fabricate components for parts used to form aircraft 800 in Figure 8. For example, fabrication equipment 908 can include machines and tools. These machines and tools can be at least one of a drill, a hydraulic press, a furnace, an autoclave, a mold, a composite tape laying machine, an automated fiber placement (AFP) machine, a vacuum system, a robotic pick and place system, a flatbed cutting machine, a laser cutter, a computer numerical control (CNC) cutting machine, a lathe, or other suitable types of equipment. Fabrication equipment 908 can be used to fabricate at least one of metal parts, composite parts, semiconductors, circuits, fasteners, ribs, skin panels, spars, antennas, or other suitable types of parts.

The assembly equipment 910 is equipment used to assemble parts to form aircraft 800 in Figure 8. In particular, the assembly equipment 910 is used to assemble components and parts to form aircraft 800 in Figure 8. The assembly equipment 910 also can include machines and tools. These machines and tools may be at least one of a robotic arm, a crawler, a faster installation system, a rail-based drilling system, or a robot. The assembly equipment 910 can be used to assemble parts such as seats, horizontal stabilizers, wings, engines, engine housings, landing gear systems, and other parts for aircraft 800 in Figure 8.

In at least one example, maintenance system 904 includes maintenance equipment 912, which can include any equipment needed to perform maintenance on aircraft 800 in Figure 8. The maintenance equipment 912 can include tools for performing different operations on parts on aircraft 800 in Figure 8. These operations can include at least one of disassembling parts, refurbishing parts, inspecting parts, reworking parts, manufacturing replacement parts, or other operations for performing maintenance on aircraft 800 in Figure 8. These operations can be for routine maintenance, inspections, upgrades, refurbishment, or other types of maintenance operations.

In the illustrative example, the maintenance equipment 912 can include ultrasonic inspection devices, x-ray imaging systems, vision systems, drills, crawlers, and other suitable devices. In some cases, the maintenance equipment 912 can include fabrication equipment 908, assembly equipment 910, or both to produce and assemble parts needed for maintenance.

The product management system 900 also includes control system 914, which is a hardware system, and can also include software or other types of components. The control system 914 is configured to control the operation of at least one of manufacturing system 902 or maintenance system 904. In particular, the control system 914 can control the operation of at least one of fabrication equipment 908, assembly equipment 910, or maintenance equipment 912.

The hardware in control system 914 can be implemented using hardware that may include computers, circuits, networks, and other types of equipment. The control may take the form of direct control of manufacturing equipment 906. For example, robots, computer-controlled machines, and other equipment can be controlled by control system 914. In other examples, control system 914 can manage operations performed by human operators 916 in manufacturing or performing maintenance on aircraft 800. For example, control system 914 can assign tasks, provide instructions, display models, or perform other operations to manage operations performed by human operators 916. For example, the control system 914 manages at least one of the manufacturing or maintenance of aircraft 800 in Figure 8 to employ a fuel tank protection system within fuel tanks for aircraft 800. The fuel protection system can be implemented in fuel tanks during manufacturing fuel tanks for adding fuel tanks during maintenance to aircraft 800.

In the examples, human operators 916 can operate or interact with at least one of manufacturing equipment 906, maintenance equipment 912, or control system 914. This interaction can occur to manufacture aircraft 800 in Figure 8.

The product management system 900 can be configured to manage other products other than aircraft 800 in Figure 8. Although the product management system 900 has been described with respect to manufacturing in the aerospace industry, the product management system 900 can be configured to manage products for other industries. For example, the product management system 900 can be configured to manufacture products for the automotive industry as well as any other suitable industries.

Figure 10 illustrates a decision tree diagram 1000 illustrating how a method of predicting non-conformances can be applied to a standard depot induction, according to an example of the present disclosure. The tree diagram 1000 represents the hierarchical relationships between variables during the induction process.

Induction is an overall record for a heavy maintenance depot visit for an aircraft. Each maintenance depot visit is uniquely identified. Each induction includes one or more work tasks, which are scheduled tasks, each including one or more work orders. A work order includes activities undertaken at the time of discovery and/or corrective maintenance addressing a non-conformance. A non-conformance relates to a part not conforming to standards, which is discovered during planned maintenance. Labor time, such as man hours, is the total amount of labor hours required to fix a non-conformance, such as a corrosion non-conformance. A discrepancy code is a specific code related to a particular discrepancy, such as a corrosion discrepancy. A discrepancy describes the non-conformance in more detail. A part can be non-conformant in multiple ways, so a non-conformance can create multiple discrepancies.

The tree diagram 1000 illustrates the relationship between consecutive levels in the process. 1-n indicates a one-to-many relationship. For example, for a given induction, there can be multiple work tasks, and for a given work task, there can be multiple work orders.

Referring to Figures 1-10, in at least one example, one or more control unit(s) 252 are configured to calculate a probability of finding non-conformances. Bayes' theorem can be used for the given conditional probability. In probability theory and statistics, Bayes' theorem describes the probability of an event, based on prior knowledge of conditions that might be related to the event. One application of Bayes' theorem is Bayesian inference, an approach to statistical inference. With Bayesian probability interpretation, the theorem expresses how a degree of belief, expressed as a probability, should rationally change to account for the availability of related evidence.

Bayes' theorem is stated by the equation:

$$P(A|B) = \frac{P(B|A)P(A)}{P(B)}$$

where **A** and *B* represent events, and $P(B) \neq 0$. $P(A|B)$ is the probability of event **A** occurring given that $B$ is true. $P(B|A)$ is the probability of event $B$ occurring given $A$ is true. $P(A)$ and $P(B)$ are the respective probabilities of observing $A$ and $B$.

$P(W_T)$ is the probability of an induction having a given work task and can be expressed:

$$P(W_T) = \frac{\text{Historical count of given work task in an induction}}{\text{Historical count of inductions}}$$

$P(N_C)$ is the probability of an induction having a corrosion non-conformance and can be expressed:

$$P(N_C) = \frac{\text{Historical count of induction work tasks that resulted in an NCR}}{\text{Historical count of inductions}}$$

Therefore, given work task, the one or more control units 252 of the non-conformance forecasting system 200 calculates the probability of discovering a non-conformance or the absence of a non-conformance. The probability of having a non-conformance for the given work task can be expressed:

$$P(N_C|W_T) = P(N_C) * P(W_T|N_C)/P(W_T) \text{ (Bayes' Theorem applied)}$$
$$= P(N_C) * 1/P(W_T)$$
$$= P(N_C)/P(W_T)$$

In at least one example, $P(W_T|N_C)$ is equal to 1 because a non-conformance may always be associated to a work task.

Given a disposition code, the control unit(s) 252 determines a probability that the disposition code is for a given work task. $P_{Given}$ is a given disposition code. $W_T$ is a work task. $P(W_T)$ is the probability of having a work task that resulted in the given disposition code. $P(P_{Given})$ is the probability of given induction resulting in the given disposition code. As such, the control unit(s) 252 determines the given work task requiring a part order, expressed as:

$$P(P_O) = \frac{\text{Historical count of work tasks that resulted in given disposition code}}{\text{Historical count of work tasks}}$$

$$P(W_T) = \frac{\text{Historical count of give work task that resulted in given disposition code}}{\text{Historical count of work tasks}}$$

In at least one other example, instead of $P_O$, $P_{Given}$ can be used. $P(P_{Given})$ is the probability of a given work task resulting in a given disposition code.

Therefore, the control unit(s) 252 determines that probability of having the given work task with a non-conformance requiring a part order can be expressed:

$$P(W_T|P_{Given}) = P(P_T) * P(N_{Given}|W_T)/P(P_{Given})$$
$$= P(W_T) * 1/P(P_{Given})$$
$$= P(W_T)/P(P_{Given})$$

Next, the control unit(s) 252 determines the average labor time for a given work task with a corrosion non-conformance. In at least on example, the control unit(s) 252 determines the average labor time (for example, average man hours) as:

$$Average\ Labor\ Time = \frac{Sum\ of\ man\ hours\ for\ a\ given\ work\ task\ with\ corrosion}{Historical\ count\ of\ given\ work\ tasks\ with\ corrosion}$$

Next, the control unit(s) 252 determines the expected labor time required for a given induction. For a given induction, the control unit(s) 252 calculates the Total Labor Time, by first calculating the Expected Labor Time, such as via probability and average labor time required. In particular, the control unit(s) 252 determines an overall value for all work tasks by multiplying the probability of a work task having a corrosion non-conformance with the average labor time (that is, average man hours) required for each work task (such as stored in the historical work records 202).

As a non-limiting example, from stored data (such as stored in the historical work records 202), the control unit(s) 252 determines there is an induction with two work tasks: WT1 and WT2. Based on stored data, the control unit(s) 252 determines that WT1 was previously used 10 times. Further, based on the stored data, the control unit(s) 252 determines that out of 10 times, there was corrosion non-conformance 5 times for a total of 20 man hours. Similarly, based on the stored data, the control unit(s) 252 determines that WT2 was previously used 100 times. Again, based on the stored data, the control unit(s) 252 determines that out of the 100 times, there was corrosion non-conformance 20 times for a total of 500 man hours. Accordingly, the control unit(s) 252 determines that the probability of WT1 having corrosion non-conformance is 5/10, that is, 50%, and the probability of WT2 having corrosion non-conformance is 20/100, that is, 20%. Further, the control unit(s) 252 determines that the average labor time required for WT1 is 20 hours/5 = 4 hours, and the average labor time required for WT2 is 500 hours/20 = 25 hours. Next, the control unit(s) 252 calculates the expected number of labor time required for the upcoming induction as 50%*4hours + 20%*25hours, which is 2 hours + 5 hours for a total of 7 hours.

The systems and methods described herein include one or more control units configured to determine a predicted labor time (that is, man hours) to resolve non-conformances, such as corrosion non-conformances. The systems and methods are configured to predict labor time requirements for resolving non-conformances for one or more parts, even if the parts do not require replacement. The systems and methods described herein model labor time requirements, instead of modeling part failures. The systems and methods described herein minimize or otherwise reduce fleet downtime, and maximize or otherwise increase fleet readiness for depot level maintenance by accounting for both part requirement and labor time.

In at least one example, the systems and methods described herein can also be configured forecast associated costs with discovery of non-conformances. In at least one example, the control unit(s) are configured to forecast or otherwise determine the material cost of components, and the cost associated with labor time.

Figure 11 illustrates a schematic block diagram of the control unit 1100, according to an example of the present disclosure. The control unit 1100 is an example of a control unit 252 shown in Figure 2. In at least one example, the control unit 1100 includes at least one processor 1101 in communication with a memory 1102. The memory 1102 stores instructions 1104, received data 1106, and generated data 1108. The control unit 1100 shown in Figure 11 is merely exemplary, and non-limiting.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 1100 may be or include one or more processors that are configured to control operation, as described herein.

The control unit 1100 is configured to execute a set of instructions that are stored in one or more data storage units or elements (such as one or more memories), in order to process data. For example, the control unit 1100 may include or be coupled to one or more memories. The data storage units may also store data or other information as desired or needed. The data storage units may be in the form of an information source or a physical memory element within a processing machine.

The set of instructions may include various commands that instruct the control unit 1100 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control unit 1100. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 1100 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" can be interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

In at least one example, the control unit 1100 can further automatically control (without human intervention), at least in part, one or more device, such as maintenance systems, devices, robots, or the like, based on predicted parts and labor times to resolve non-conformances. For example, based on determined maintenance operations, predicted required parts, and predicted labor time, the control unit 1100 can automatically operate various systems, such as maintenance robots, to complete and/or assist in completion of the maintenance operations during labor time, as predicted by the control unit 1100.

In at least one example, all or part of the systems and methods described herein may be or otherwise include an artificial intelligence (AI) or machine-learning system that can automatically perform the operations of the methods also described herein. For example, the control unit 1100 can be an artificial intelligence or machine learning system. These types of systems may be trained from outside information and/or self-trained to repeatedly improve the accuracy with how the data is analyzed to determine non-conformances, any parts needed for maintenance procedures, and labor time to complete maintenance operations. Over time, these systems can improve by determining such with increasing accuracy and speed, thereby significantly reducing the likelihood of any potential errors. The AI or machine-learning systems described herein may include technologies enabled by adaptive predictive power and that exhibit at least some degree of autonomous learning to automate and/or enhance pattern detection (for example, recognizing irregularities or regularities in data), customization (for example, generating or modifying rules to optimize record matching), or the like. The systems may be trained and re-trained using feedback from one or more prior analyses of the data, ensemble data, and/or other such data. Based on this feedback, the systems may be trained by adjusting one or more parameters, weights, rules, criteria, or the like, used in the analysis of the same. This process can be performed using the data and ensemble data instead of training data, and may be repeated many times to repeatedly improve the determination of the non-conformances, any parts needed for maintenance procedures, and labor time to complete maintenance operations. The training minimizes conflicts and interference by performing an iterative training algorithm, in which the systems are retrained with an updated set of data and based on the feedback examined prior to the most recent training of the systems. This provides a robust analysis model that can better predict parts for maintenance operations, required parts, and labor times.

Examples of the subject disclosure provide systems and methods that allow large amounts of data to be quickly and efficiently analyzed by a computing device. For example, the control unit 1100 can analyze various aspects of maintenance operations for large vehicle systems, which include numerous sub-systems, components, parts, and the like. Further, the control unit 1100 accounts for variables based on the various aspects, and predicts labor times from the variables, which can be in a format not readily discernable by a human being. As such, large amounts of data, which may not be discernable by human beings, are being tracked and analyzed. The vast amounts of data are efficiently organized and/or analyzed by the control unit 1100, as described herein. The control unit 1100 analyzes the data in a relatively short time in order to quickly and efficiently determine the parts and labor times to resolve non-conformances during inductions. A human being would be incapable of efficiently analyzing such vast amounts of data in such a short time. As such, examples of the subject disclosure provide increased and efficient functionality, and vastly superior performance in relation to a human being analyzing the vast amounts of data.

In at least one example, components of the systems and methods, such as the control unit 1100, provide and/or enable a computer system to operate as a special computer system for predicting parts and labor times to resolve non-conformances of various components during maintenance of aircraft.

Figure 12 illustrates a perspective front view of the aircraft 1200, according to an example of the present disclosure. The aircraft 1200 (such as a commercial aircraft) is an example of the aircraft 800 shown in Figure 8. The aircraft 1200 includes a propulsion system 1212 that includes engines 1214, for example. Optionally, the propulsion system 1212 may include more engines 1214 than shown. The engines 1214 are carried by wings 1216 of the aircraft 1200. In other examples, the engines 1214 may be carried by a fuselage 1218 and/or an empennage 1220. The empennage 1220 may also support horizontal stabilizers 1222 and a vertical stabilizer 1224. The fuselage 1218 of the aircraft 1200 defines an internal cabin 1230, which includes a flight deck or cockpit, one or more work sections (for example, galleys, personnel carry-on baggage areas, and the like), one or more passenger sections (for example, first class, business class, and coach sections), one or more lavatories, and/or the like. It is to be understood that the aircraft 1200 can be sized, shaped, and configured differently than shown in Figure 12. Examples of the present disclosure can also be used with military aircraft. Further, examples of the present disclosure can be used with various other types of vehicles, such as automobiles, trains, watercraft, spacecraft, and the like.

Also provided are the following illustrative, non-exhaustive examples of the subject-matter encompassed herein, which relate to:

A system comprising: one or more control units configured to: collate historical work records related to a vehicle model, calculate, from the historical work records, probabilities of one or more non-conformances during an induction of a vehicle, wherein the induction is an overall record for a heavy maintenance depot visit, predict labor time to resolve the one or more non-conformances, and output an electronic signal including information regarding the labor time, as predicted by the one or more control units, to a user interface display.

The system described in the immediately preceding paragraph, wherein the historical work records specify one or more work tasks, non-conformances discovered during the one or more work tasks, any replacement parts required for the one or more work tasks, and one or more past labor times required to resolve the one or more non-conformances.

The system described in any of the two immediately preceding paragraphs, further comprising a user interface display, wherein the one or more control units are further configured to show the labor time, as predicted by the one or more control units, on the user interface display.

The system described in any of the three immediately preceding paragraphs, wherein the one or more control units are further configured to determine a probability of the induction having a given work task, and a probability of the induction having one or more corrosion non-conformances.

The system described in the immediately preceding paragraph, wherein the one or more control units are configured to determine a probability of having the one or more non-conformances for the given task work from the probability of the induction having the given work task, and the probability of the induction having the one or more corrosion non-conformances.

The system described in any of the five immediately preceding paragraphs, wherein the one or more control units are further configured to determine a probability that a disposition code is for a given work task.

The system described in any of the six immediately preceding paragraphs, wherein the one or more control units are further configured to determine a probability having a given work task with the one or more non-conformances requiring a part.

The system described in any of the seven immediately preceding paragraphs, wherein the control unit is configured to predict the labor time, at least in part, by determining an average labor time as a sum of man hours for a given work task with corrosion divided by a historical count of given work tasks.

The system described in any of the eight immediately preceding paragraphs, wherein the control unit is configured to predict the labor time, at least in part, by determining an overall value for all work tasks by multiplying a probability of a work task having a corrosion non-conformance with an average labor time required for each work task.

The system described in any of the nine immediately preceding paragraphs, wherein the one or more control units are further configured to automatically control one or more maintenance devices to perform one or more maintenance operations during the labor time.

The system described in any of the ten immediately preceding paragraphs, wherein the one or more control units is an artificial intelligence or machine learning system.

A method comprising: collating, by one or more control units, historical work records related to a vehicle model; calculating, by the one or more control units, from the historical work records, probabilities of one or more non-conformances during an induction of a vehicle, wherein the induction is an overall record for a heavy maintenance depot visit; predicting, by the one or more controls unit, labor time to resolve the one or more non-conformances; outputting, by the one or more control units, an electronic signal including information regarding the labor time, as predicted by the one or more control units, to a user interface display; and showing, by the one or more control units, the labor time, as predicted by the one or more control units, on the user interface display.

The method described in the immediately preceding paragraph, wherein the historical work records specify one or more work tasks, non-conformances discovered during the one or more work tasks, any replacement parts required for the one or more work tasks, and one or more past labor times required to resolve the one or more non-conformances.

The method described in any of the two immediately preceding paragraphs, wherein said predicting comprises determining a probability of the induction having a given work task, and a probability of the induction having one or more corrosion non-conformances.

The method described in the immediately preceding paragraph, wherein said predicting further comprises determining a probability of having the one or more non-conformances for the given task work from the probability of the induction having the given work task, and the probability of the induction having the one or more corrosion non-conformances.

The method described in any of the four immediately preceding paragraphs, wherein said predicting comprises determining a probability that a disposition code is for a given work task.

The method described in any of the five immediately preceding paragraphs, wherein said predicting comprises determining a probability having a given work task with the one or more non-conformances requiring a part.

The method described in any of the six immediately preceding paragraphs, wherein said predicting comprises determining an average labor time as a sum of man hours for a given work task with corrosion divided by a historical count of given work tasks.

The method described in any of the seven immediately preceding paragraphs, wherein said predicting comprises determining an overall value for all work tasks by multiplying a probability of a work task having a corrosion non-conformance with an average labor time required for each work task.

A non-transitory computer-readable storage medium comprising executable instructions that, in response to execution, cause one or more control units comprising a processor, to perform operations comprising: collating historical work records related to a vehicle model; calculating from the historical work records, probabilities of one or more non-conformances during an induction of a vehicle, wherein the induction is an overall record for a heavy maintenance depot visit; predicting labor time to resolve the one or more non-conformances; outputting an electronic signal including information regarding the labor time, as predicted by the one or more control units, to a user interface display; and showing the labor time, as predicted by the one or more control units, on the user interface display.

As described herein, examples of the present disclosure provide systems and methods that efficiently and effectively schedule maintenance of aircraft, including parts and labor. Further, examples of the present disclosure provide systems and methods for forecasting and predicting corrosion-related non-conformances for aircraft during maintenance operations.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A method comprising:

    collating, by one or more control units, historical work records related to a vehicle model;
    calculating, by the one or more control units, from the historical work records, probabilities of one or more non-conformances during an induction of a vehicle, wherein the induction is an overall record for a heavy maintenance depot visit;
    predicting, by the one or more controls unit, labor time to resolve the one or more non-conformances;
    outputting, by the one or more control units, an electronic signal including information regarding the labor time, as predicted by the one or more control units, to a user interface display; and

2. The method of claim 1, further comprising: showing, by the one or more control units, the labor time, as predicted by the one or more control units, on the user interface display.

3. The method of any of claims 1 - 2, wherein the historical work records specify one or more work tasks, non-conformances discovered during the one or more work tasks, any replacement parts required for the one or more work tasks, and one or more past labor times required to resolve the one or more non-conformances.

4. The method of any of claims 1 - 3, wherein said predicting comprises determining a probability of the induction having a given work task, and a probability of the induction having one or more corrosion non-conformances.

5. The method of claim 4, wherein said predicting further comprises: determining a probability of having the one or more non-conformances for the given task work from the probability of the induction having the given work task, and the probability of the induction having the one or more corrosion non-conformances.

6. The method of any of claims 1 - 5, wherein said predicting comprises determining a probability that a disposition code is for a given work task.

7. The method of any of claims 1 - 6, wherein said predicting comprises determining a probability having a given work task with the one or more non-conformances requiring a part.

8. The method of any of claims 1 - 7, wherein said predicting comprises determining an average labor time as a sum of man hours for a given work task with corrosion divided by a historical count of given work tasks.

9. The method of any of claims 1 - 8, wherein said predicting comprises determining an overall value for all work tasks by multiplying a probability of a work task having a corrosion non-conformance with an average labor time required for each work task.

10. The method of any of claims 1 - 9, further comprising: automatically controlling one or more maintenance devices to perform one or more maintenance operations during the labor time.

11. A system comprising one or more control units configured to implement a method according to any of claims 2 - 10.

12. The system of any of claims 10 - 11, further comprising a user interface display, wherein the one or more control units are further configured to show the labor time, as predicted by the one or more control units, on the user interface display.

13. The system of any of claims 10 - 12, wherein the one or more control units is an artificial intelligence or machine learning system.

14. A computer-readable storage medium comprising executable instructions that, in response to execution, cause one or more control units comprising a processor, to perform operations of a method according to claim 1.

15. The computer-readable storage medium of claim 14, wherein the executable instructions cause the one or more control units to perform operations of a method of any of claims 2 - 10.

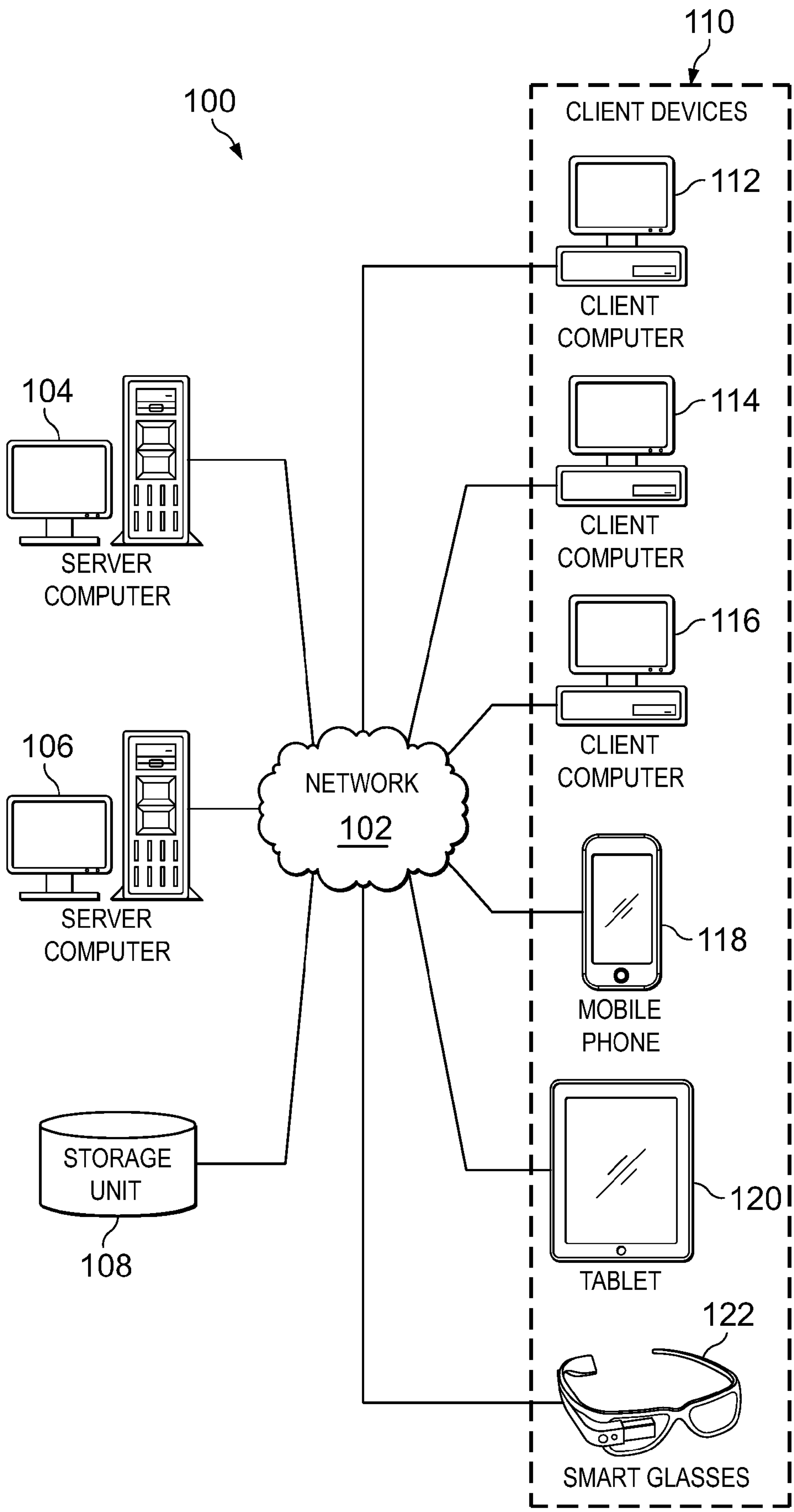
110
100
CLIENT DEVICES
112
CLIENT COMPUTER
104
114
SERVER COMPUTER
CLIENT COMPUTER
116
106
NETWORK
102
CLIENT COMPUTER
SERVER COMPUTER
118
MOBILE PHONE
STORAGE UNIT
120
108
TABLET
122
SMART GLASSES

FIG. 1

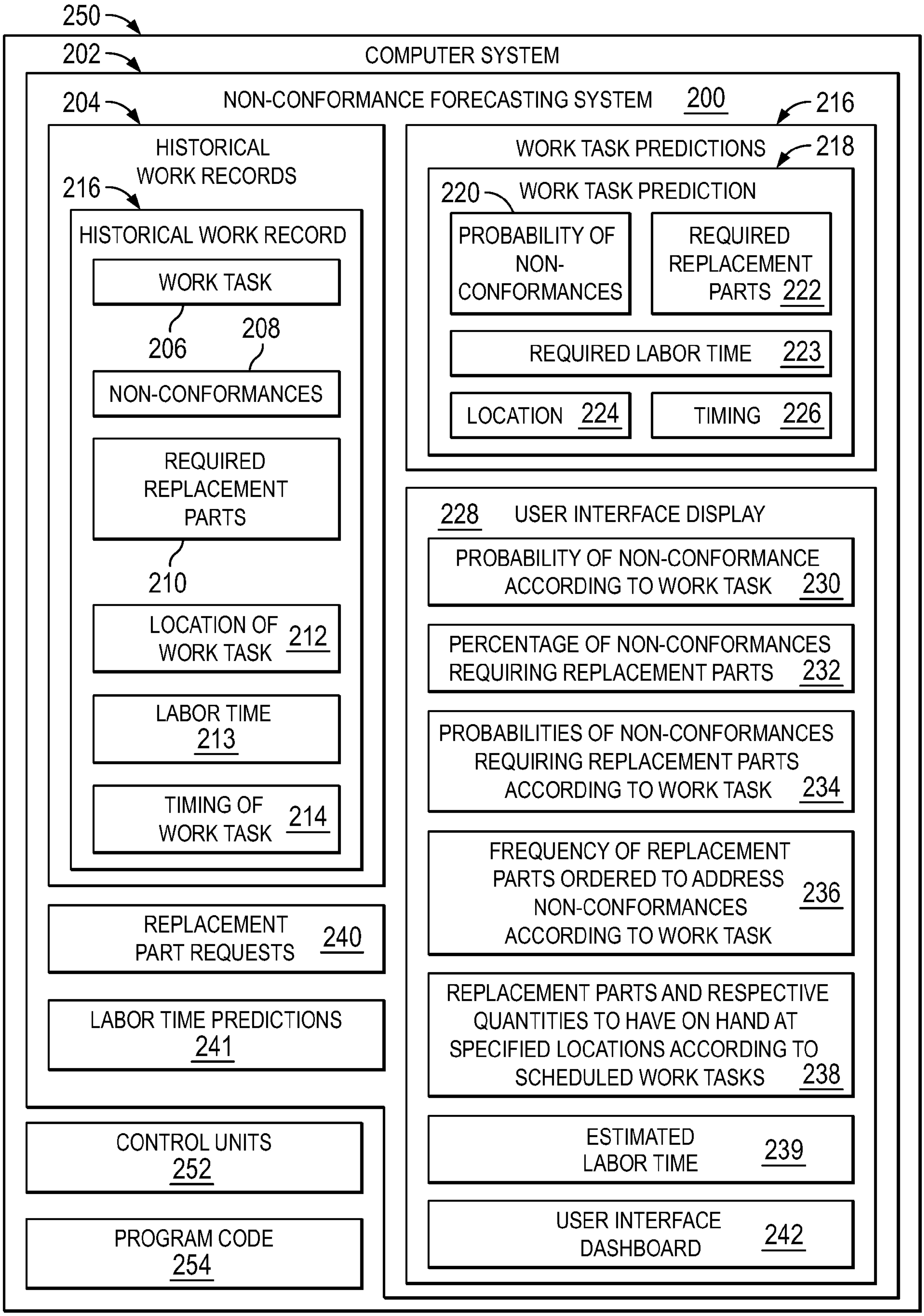
250
202
COMPUTER SYSTEM
204
NON-CONFORMANCE FORECASTING SYSTEM 200
216
HISTORICAL WORK RECORDS
216
HISTORICAL WORK RECORD
WORK TASK
206
208
NON-CONFORMANCES
REQUIRED REPLACEMENT PARTS
210
LOCATION OF WORK TASK 212
LABOR TIME 213
TIMING OF WORK TASK 214
REPLACEMENT PART REQUESTS 240
LABOR TIME PREDICTIONS 241
WORK TASK PREDICTIONS
218
220
WORK TASK PREDICTION
PROBABILITY OF NON-CONFORMANCES
REQUIRED REPLACEMENT PARTS 222
REQUIRED LABOR TIME 223
LOCATION 224
TIMING 226
228 USER INTERFACE DISPLAY
PROBABILITY OF NON-CONFORMANCE ACCORDING TO WORK TASK 230
PERCENTAGE OF NON-CONFORMANCES REQUIRING REPLACEMENT PARTS 232
PROBABILITIES OF NON-CONFORMANCES REQUIRING REPLACEMENT PARTS ACCORDING TO WORK TASK 234
FREQUENCY OF REPLACEMENT PARTS ORDERED TO ADDRESS NON-CONFORMANCES ACCORDING TO WORK TASK 236
REPLACEMENT PARTS AND RESPECTIVE QUANTITIES TO HAVE ON HAND AT SPECIFIED LOCATIONS ACCORDING TO SCHEDULED WORK TASKS 238
ESTIMATED LABOR TIME 239
USER INTERFACE DASHBOARD 242
CONTROL UNITS 252
PROGRAM CODE 254

FIG. 2

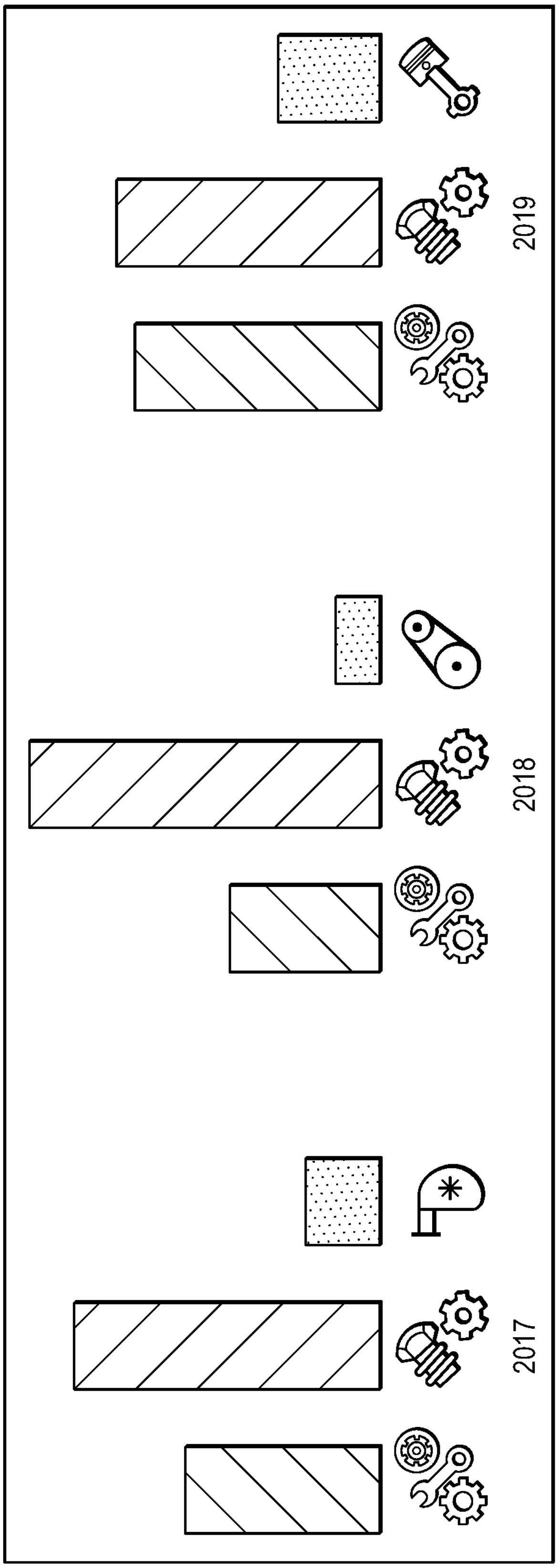


FIG. 3
(PRIOR ART)

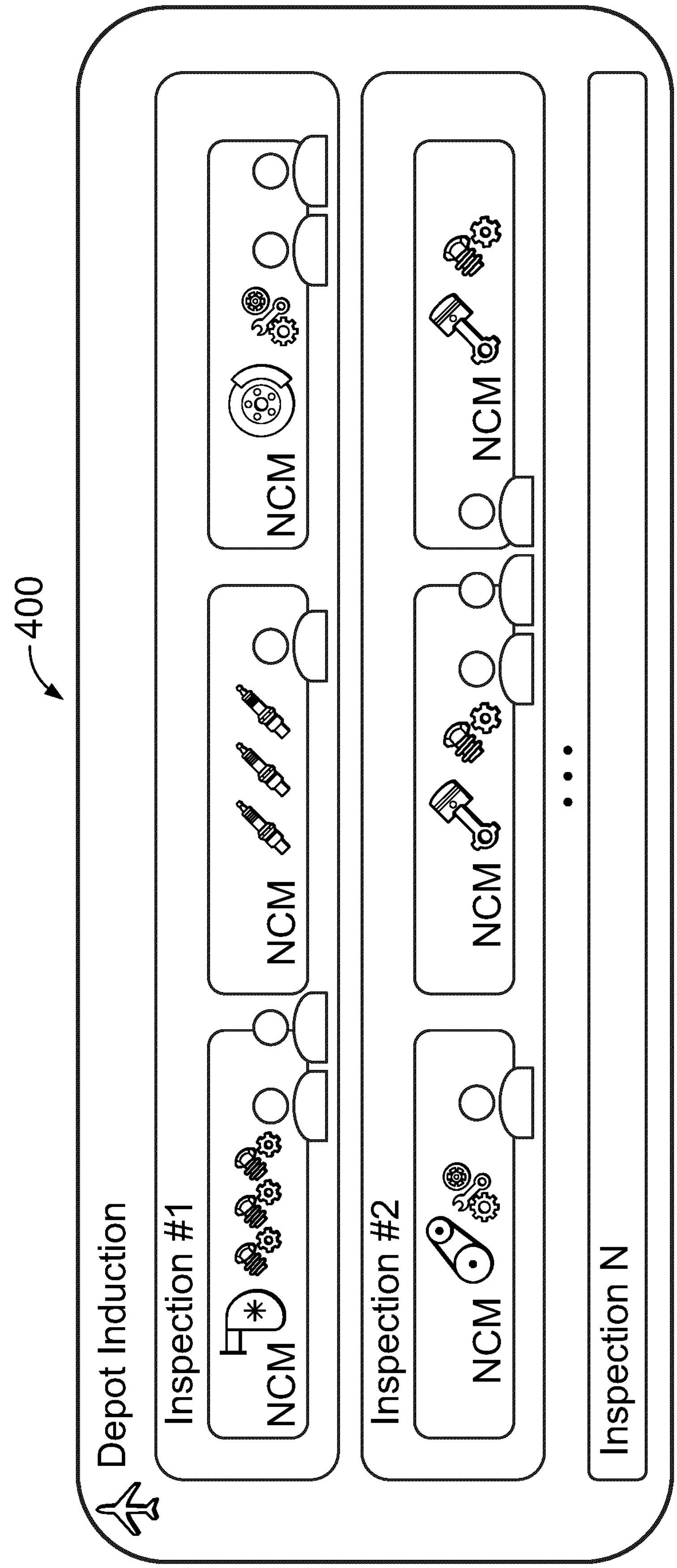
400
Depot Induction
Inspection #1
NCM
NCM
NCM
Inspection #2
NCM
NCM
NCM
Inspection N

FIG. 4

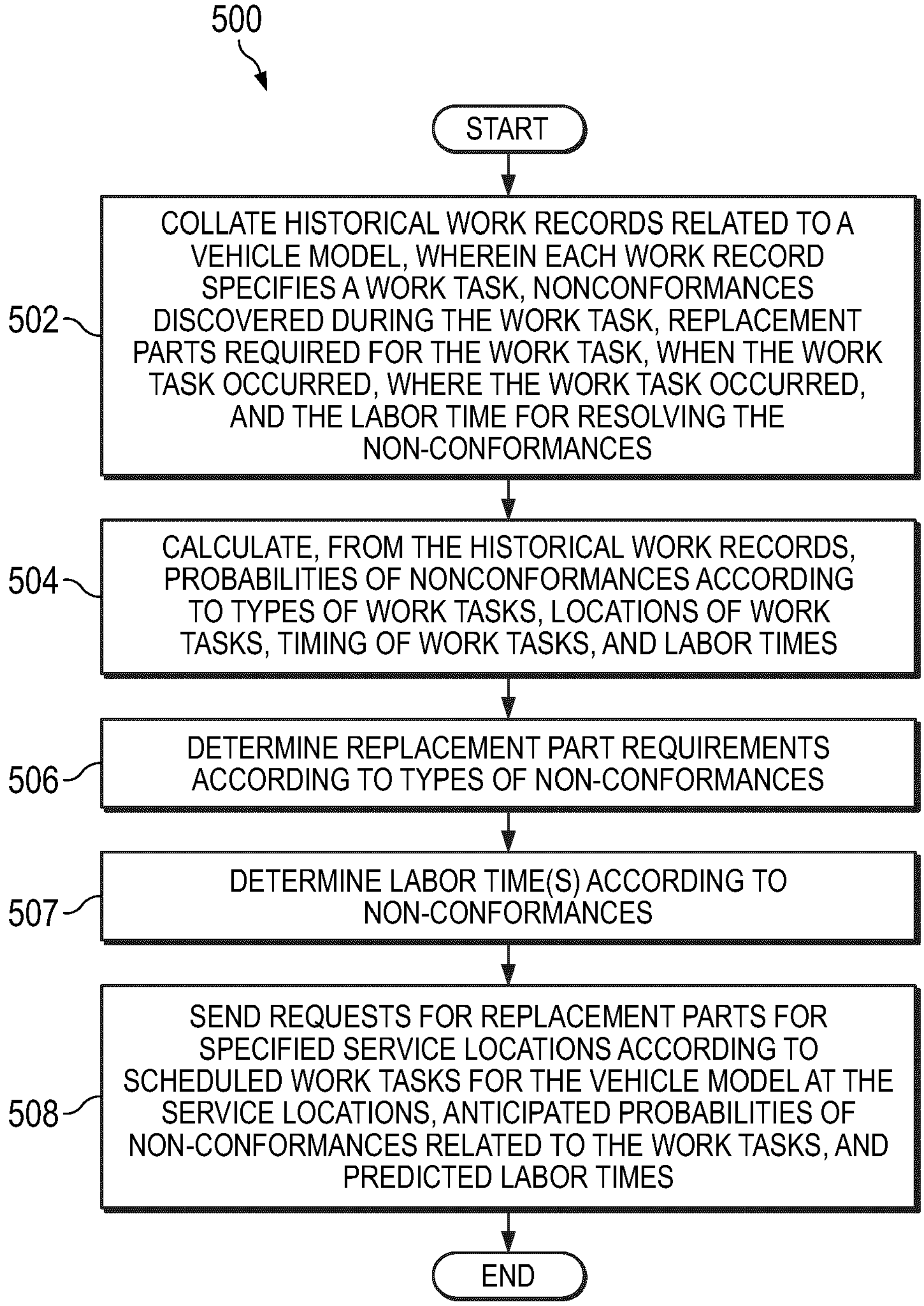
500
START
502
COLLATE HISTORICAL WORK RECORDS RELATED TO A VEHICLE MODEL, WHEREIN EACH WORK RECORD SPECIFIES A WORK TASK, NONCONFORMANCES DISCOVERED DURING THE WORK TASK, REPLACEMENT PARTS REQUIRED FOR THE WORK TASK, WHEN THE WORK TASK OCCURRED, WHERE THE WORK TASK OCCURRED, AND THE LABOR TIME FOR RESOLVING THE NON-CONFORMANCES
504
CALCULATE, FROM THE HISTORICAL WORK RECORDS, PROBABILITIES OF NONCONFORMANCES ACCORDING TO TYPES OF WORK TASKS, LOCATIONS OF WORK TASKS, TIMING OF WORK TASKS, AND LABOR TIMES
506
DETERMINE REPLACEMENT PART REQUIREMENTS ACCORDING TO TYPES OF NON-CONFORMANCES
507
DETERMINE LABOR TIME(S) ACCORDING TO NON-CONFORMANCES
508
SEND REQUESTS FOR REPLACEMENT PARTS FOR SPECIFIED SERVICE LOCATIONS ACCORDING TO SCHEDULED WORK TASKS FOR THE VEHICLE MODEL AT THE SERVICE LOCATIONS, ANTICIPATED PROBABILITIES OF NON-CONFORMANCES RELATED TO THE WORK TASKS, AND PREDICTED LABOR TIMES
END

FIG. 5

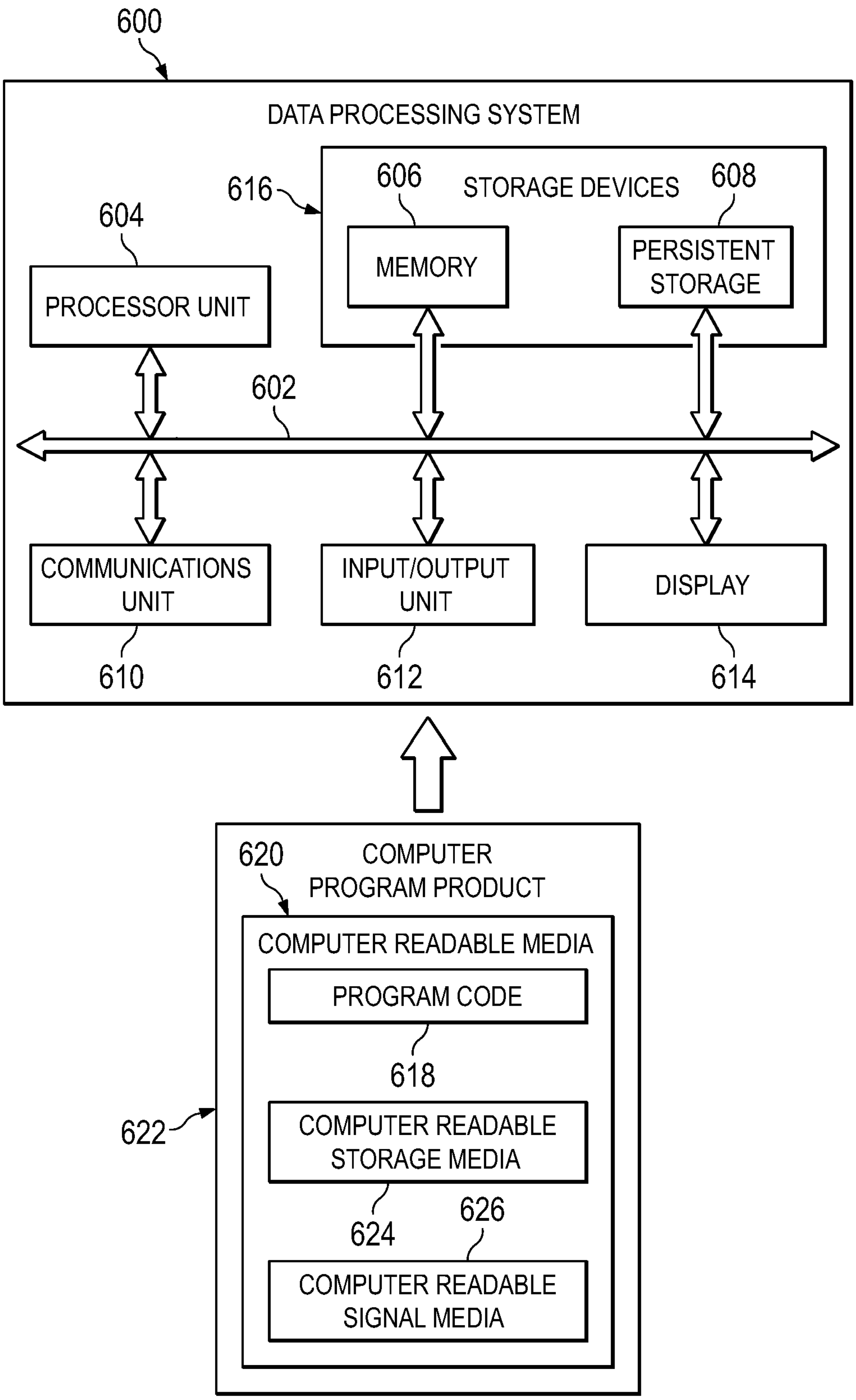
600
DATA PROCESSING SYSTEM
616
606
STORAGE DEVICES
608
604
MEMORY
PERSISTENT STORAGE
PROCESSOR UNIT
602
COMMUNICATIONS UNIT
INPUT/OUTPUT UNIT
DISPLAY
610
612
614
620
COMPUTER PROGRAM PRODUCT
COMPUTER READABLE MEDIA
PROGRAM CODE
618
622
COMPUTER READABLE STORAGE MEDIA
624
626
COMPUTER READABLE SIGNAL MEDIA

**FIG. 6**

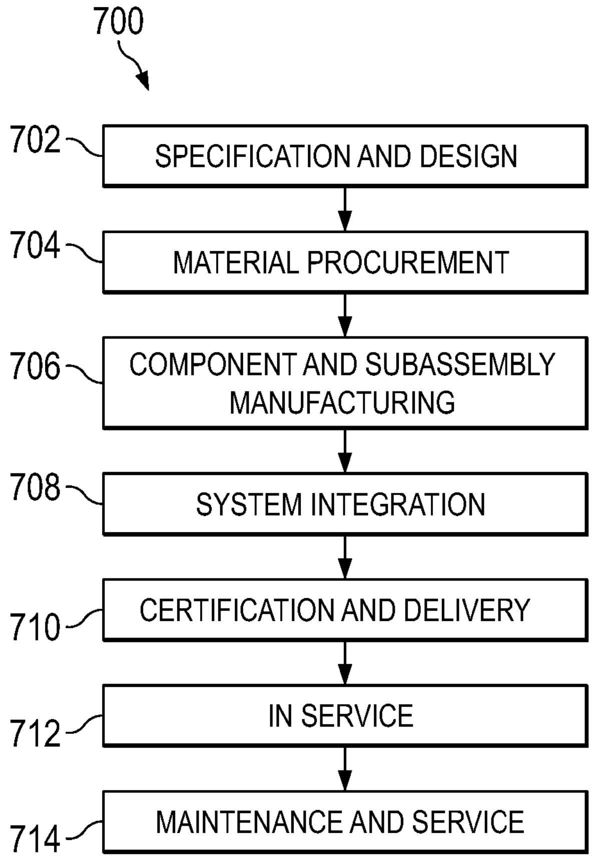
700
702
SPECIFICATION AND DESIGN
704
MATERIAL PROCUREMENT
706
COMPONENT AND SUBASSEMBLY MANUFACTURING
708
SYSTEM INTEGRATION
710
CERTIFICATION AND DELIVERY
712
IN SERVICE
714
MAINTENANCE AND SERVICE

FIG. 7

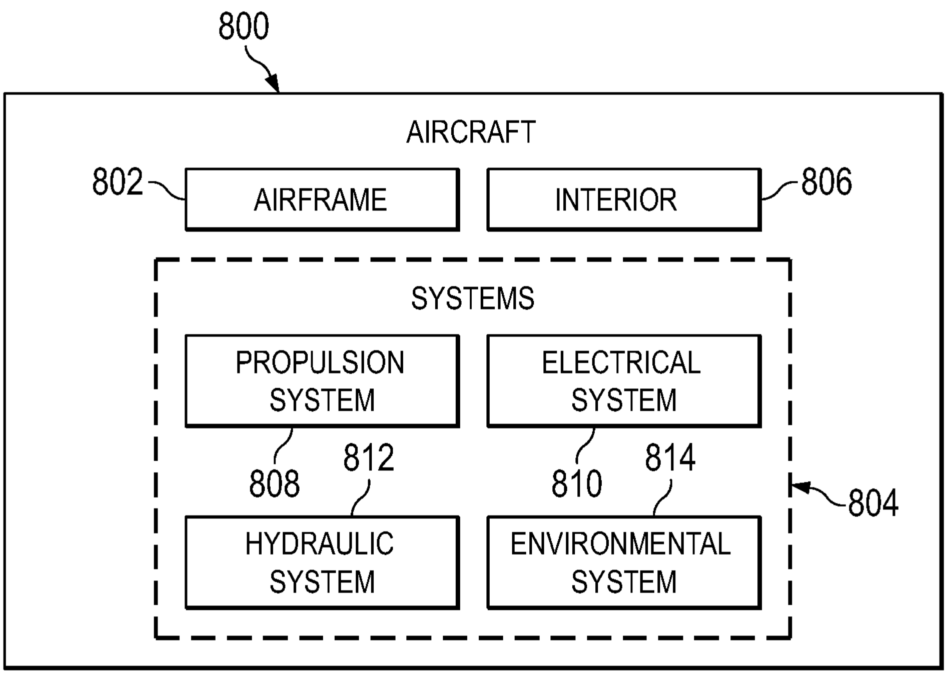
800
AIRCRAFT
802
AIRFRAME
INTERIOR
806
SYSTEMS
PROPULSION SYSTEM
ELECTRICAL SYSTEM
808
812
810
814
804
HYDRAULIC SYSTEM
ENVIRONMENTAL SYSTEM

FIG. 8

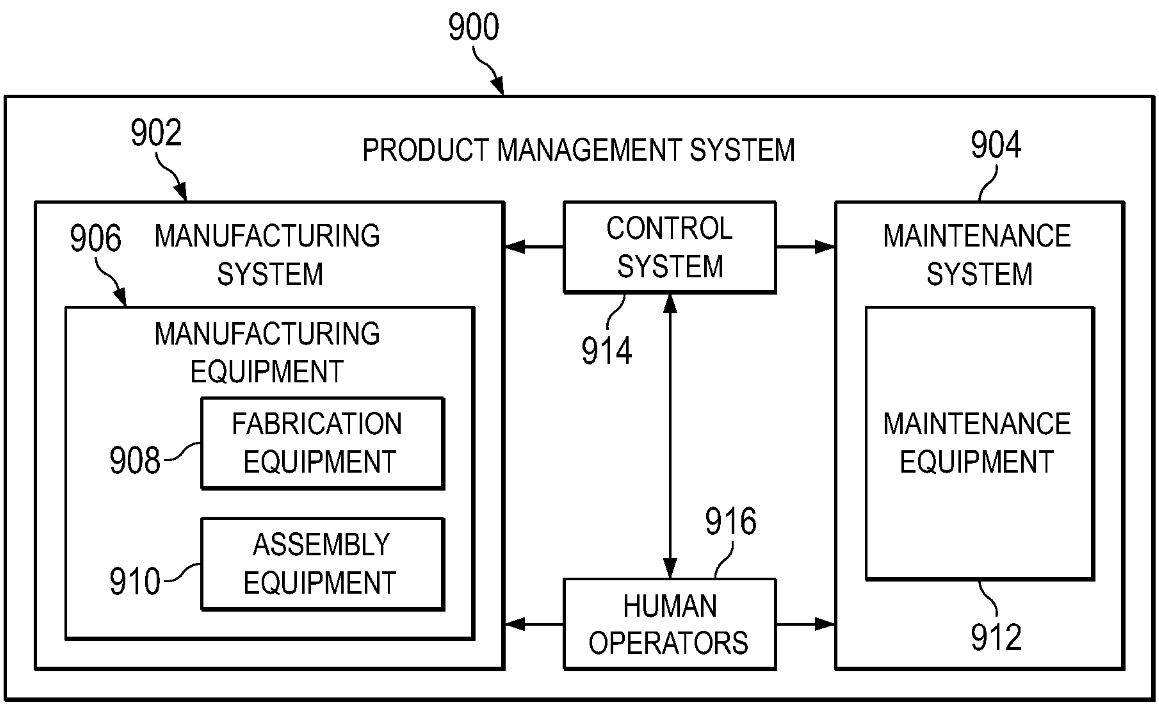
900
PRODUCT MANAGEMENT SYSTEM
902
MANUFACTURING SYSTEM
906
MANUFACTURING EQUIPMENT
908
FABRICATION EQUIPMENT
910
ASSEMBLY EQUIPMENT
CONTROL SYSTEM
914
916
HUMAN OPERATORS
904
MAINTENANCE SYSTEM
MAINTENANCE EQUIPMENT
912

FIG. 9

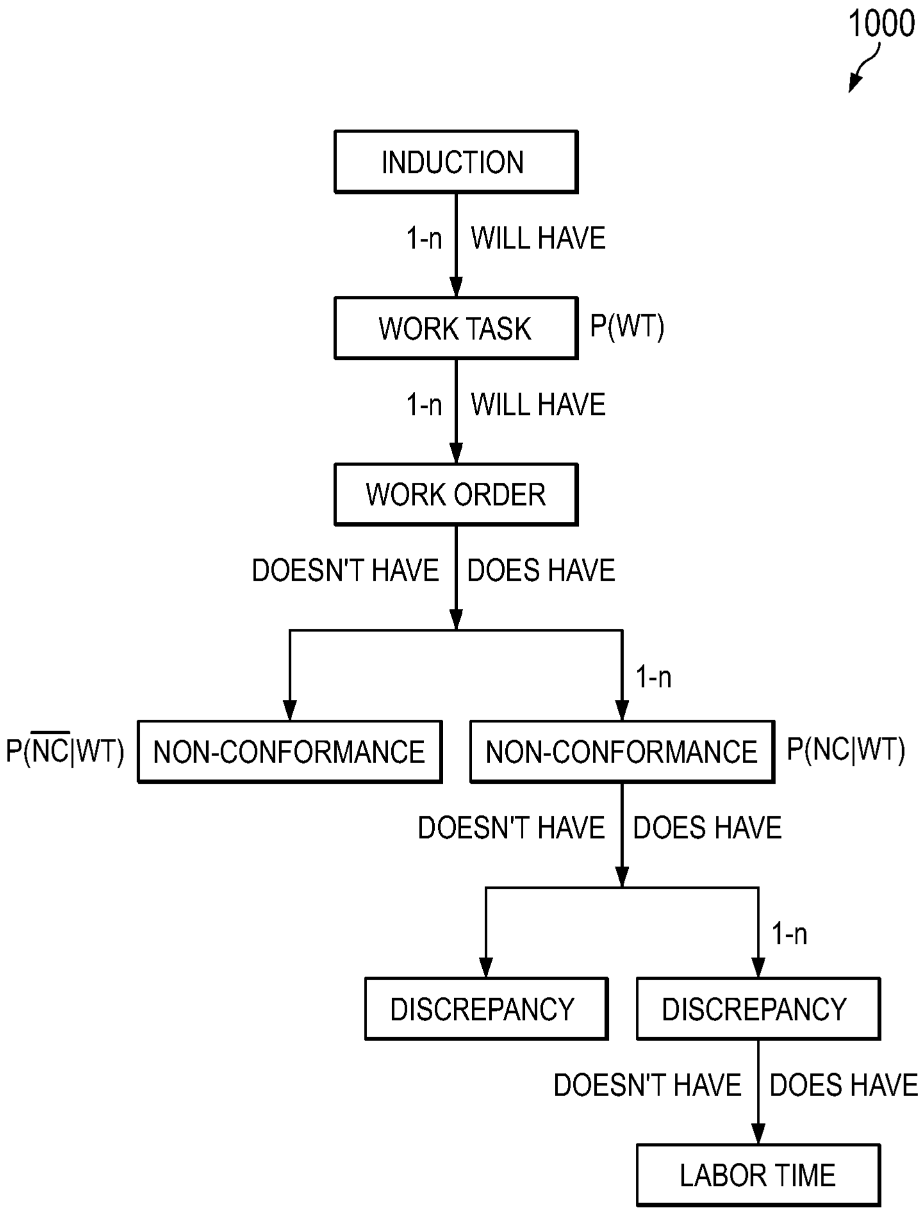
1000
INDUCTION
1-n
WILL HAVE
WORK TASK
P(WT)
1-n
WILL HAVE
WORK ORDER
DOESN'T HAVE
DOES HAVE
1-n
P($\overline{NC}$|WT)
NON-CONFORMANCE
NON-CONFORMANCE
P(NC|WT)
DOESN'T HAVE
DOES HAVE
1-n
DISCREPANCY
DISCREPANCY
DOESN'T HAVE
DOES HAVE
LABOR TIME

FIG. 10

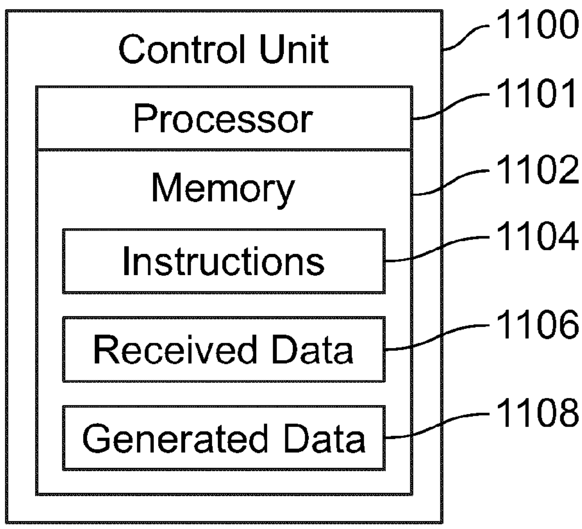
Control Unit
Processor
Memory
Instructions
Received Data
Generated Data
1100
1101
1102
1104
1106
1108

FIG. 11

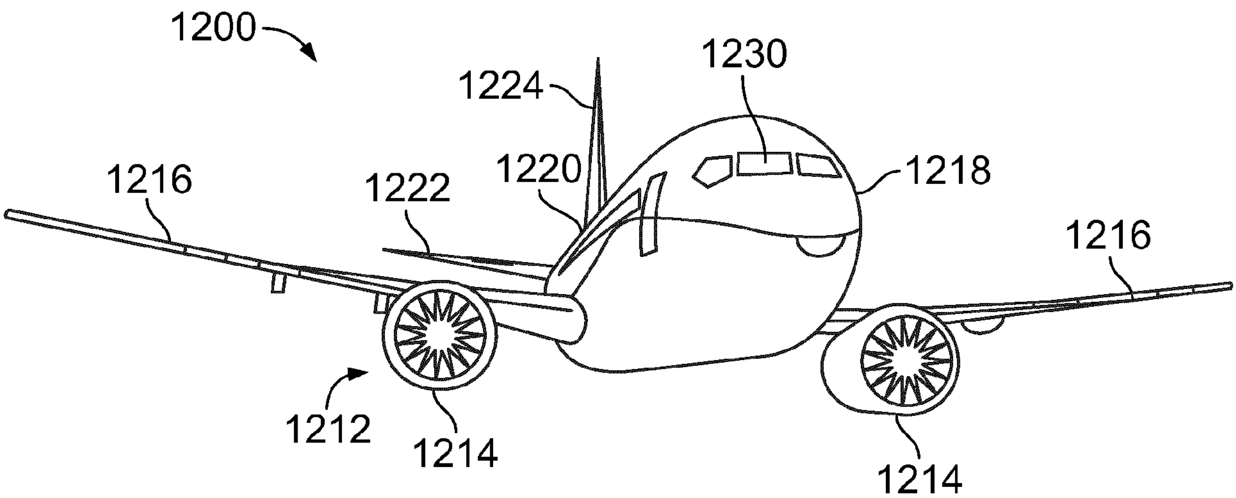
1200
1224
1230
1216
1222
1220
1218
1216
1212
1214
1214

FIG. 12

Europäisches Patentamt
European Patent Office
Office européen des brevets

# EUROPEAN SEARCH REPORT

Application Number
EP 25 17 2017

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEE CHIN-HSIUNG ET AL: "Research on Predictive Maintenance of Aircraft Based on Long Short-Term Memory Neural Network", 2022 ASIA CONFERENCE ON ADVANCED ROBOTICS, AUTOMATION, AND CONTROL ENGINEERING (ARACE), IEEE, 26 August 2022 (2022-08-26), pages 150-154, XP034230309, DOI: 10.1109/ARACE56528.2022.00034 [retrieved on 2022-11-18] | 1-6,8-15 | INV. G06Q10/20 G05B23/02 ADD. G06N20/00 |
| Y | * the whole document * | 7 | |
| A | WANG LUBING ET AL: "Predictive Maintenance Scheduling for Aircraft Engines Based on Remaining Useful Life Prediction", IEEE INTERNET OF THINGS JOURNAL, IEEE, vol. 11, no. 13, 12 March 2024 (2024-03-12), pages 23020-23031, XP011973989, DOI: 10.1109/JIOT.2024.3376715 [retrieved on 2024-03-13] * Sections II, III and Equation 12 * | 1-6,8-15 | |
| Y | US 2024/046176 A1 (BELLEMARE-DAVIS ALEXANDER [CA] ET AL) 8 February 2024 (2024-02-08) | 7 | |
| A | * See especially 119. * | 1-6,8-15 | |
| A | DATABASE INSPEC [Online] THE INSTITUTION OF ELECTRICAL ENGINEERS, STEVENAGE, GB; 2022, TYNCHEROV T ET AL: "Improving the Accuracy of Forecasting the Labour Intensity of Aircraft Heavy Maintenance", XP002813550, Database accession no. 22003102 * abstract * | 1-15 | |

TECHNICAL FIELDS SEARCHED (IPC)

G06Q
G06N
G05B

The present search report has been drawn up for all claims

1

| Place of search | Date of completion of the search | Examiner |
|---|---|---|
| Munich | 13 June 2025 | Jullien, Sami |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 17 2017

This annex lists the patent family members relating to the patent documents cited in the above-mentioned European search report. The members are as contained in the European Patent Office EDP file on
The European Patent Office is in no way liable for these particulars which are merely given for the purpose of information.

13-06-2025

| Patent document cited in search report | Publication date | Patent family member(s) | Publication date |
|---|---|---|---|
| US 2024046176 A1 | 08-02-2024 | CN 117541093 A | 09-02-2024 |
| | | EP 4318340 A1 | 07-02-2024 |
| | | JP 2024022509 A | 16-02-2024 |
| | | US 2024046176 A1 | 08-02-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20240046176